# EUROPEAN PATENT APPLICATION

(11) **EP 4 385 920 A1**
(43) Date of publication of application: **19.06.2024**
(21) Application number: 22214364.6
(22) Date of filing: 16.12.2022
(51) Int. Cl.: B65G 1/04, B61K 7/18, B65G 1/02

(54) **WAREHOUSE SHUTTLE BLOCKING ARRANGEMENT**

(71) Applicant: MOVU, 9160 Lokeren (BE)
(72) Inventor: Vandemergel, Luc, 8020 Oostkamp (BE)
(74) Representative: IP HILLS NV

(57) **Abstract**

An automated warehouse shuttle blocking arrangement, the arrangement being removably mountable on a rail of a track configured to guide at least one automated warehouse shuttle, wherein the blocking arrangement is movable between a first position, in which the blocking arrangement is mountable and/or unmountable to the rail, and a second position, in which the blocking arrangement is configured to clamp the rail.

## Description

### Field of the Invention

The present invention generally relates to an automated warehouse shuttle blocking arrangement.

### Background of the Invention

Automated warehouses and automated warehouse shuttle systems are generally known. Warehouses include relatively large storage structures, generally structured along a plurality of substantially parallel lanes. The storage structures are arranged to provide storage locations to goods, often palletized goods. Said storage locations may be provided on a plurality of levels within the storage structure. In order to automate delivery and pick up of goods to and from said storage locations, automated warehouses can include an automated warehouse shuttle system. Said shuttle systems generally include a track system including at least one pair of rails arranged in a substantially horizontal plane along a lane of the warehouse, or more generally speaking, at least one pair of rails along each of the lanes of the warehouse, which are generally arranged substantially in parallel to each other, and more preferably, a pair of rails per level and per lane of the warehouse. Transverse aisles may connect said substantially parallel lanes, which transverse lanes may or may not be provided with tracks. Additionally, lift systems may allow connections between various levels of the storage structure. The system further includes warehouse shuttles, in particular mobile robots, which are configured to move along said tracks, and which are configured to transport goods and/or goods carriers to and from said storage locations in the storage structure. An automated shuttles system can comprise a plurality of automated shuttles which are often integrated into, and controlled by, a central warehouse management control system.

When one of said shuttles needs servicing, the shuttle can generally be moved to a servicing area outside of an operation area of the shuttle system, but it may happen that a shuttle is broken and cannot be moved automatically out of the system. In other situations, goods or goods carriers may have fallen out of their storage location and may block a track such that shuttles cannot pass anymore. A human intervention may then be necessary at the location of the broken shuttle or the blocked track. Since a central warehouse management system is generally unable to deal with such exceptional situations like a human presence on the rails, there is often no other option than to stop all shuttle movement in the entire system during the time needed for the human intervention on the broken shuttle to avoid accidents, such as a shuttle running into the broken shuttle or worse, into the intervening person. Such a general interruption of the warehouse shuttle system can be relatively disruptive for operations and relatively costly.

Document US 2019/0176323 discloses a safety system for servicing of areas within a warehouse storage system including physical blocking of access points to a service area with horizontally and/or vertically oriented mechanical guards such that a service area is isolated against entry of shuttles. However, these mechanical guards are thick steel plates extending between substantially an entire width of a lane. Such steel plates are therefore relatively heavy and rather difficult to put in place. In case of automated positioning, such mechanical guards need to be integrated into the storage structure in advance, which can complicate installation of the storage structure.

It is also known to use emergency stop devices at ends of tracks to avoid that shuttles can fall off from a track at an end of said track. However, said emergency stop devices are generally permanently installed and are not configured to be removably used nor configured to be mounted along a track at a distance of an end portion of the track.

It is therefore an aim of the present invention to solve or at least partly alleviate the above-mentioned problems. In particular, the present invention aims at providing a warehouse shuttle blocking arrangement which can limit disturbance of the automated warehouse shuttle system to a relatively small area around a problem causing shuttle, thus avoiding interruption of an entire warehouse shuttle system.

### Summary of the Invention

To this aim, there is provided an automated warehouse shuttle blocking arrangement according to the features of claim 1. In particular, the automated warehouse shuttle blocking arrangement is removably mountable on a rail of a track configured to guide at least one automated warehouse shuttle. The shuttle blocking arrangement is movable between a first position, in which the blocking arrangement is mountable and/or unmountable to the rail, and a second position, in which the blocking arrangement is configured to clamp the rail such that the at least one automated warehouse shuttle is blocked. When an automated warehouse shuttle is moving along a guiding track, the shuttle is generally arranged and/or programmed to slow down and/or stop when approaching a mechanical barrier. However, such a programmed stopping may not be quick enough or reliable enough when a human intervention is needed on a track. Therefore, it may be desirable to be able to use an automated warehouse shuttle blocking arrangement according to the invention. Since the blocking arrangement is mountable on the rail, rather than for example on the warehouse storage structure as shown in the prior art, the blocking arrangement can be installed at any suitable location where needed along the rail and is not limited to specific locations in the warehouse. In this way, only the strict minimum of the warehouse shuttle system may be cut off when necessary. The shuttle blocking arrangement may be arranged on a single rail, for example when only one rail can be easily and/or safely reached. Alternatively, a shuttle blocking arrangement may be mounted to both rails of a track of the warehouse shuttle system, preferably, one blocking arrangement on each rail of the track at substantially the same location on the track. The first position, in which the blocking arrangement is mountable to the rail, may also be considered as a resting position or a normal position of the blocking arrangement when no shuttle needs to be stopped. The second position of the blocking arrangement is configured to stop a shuttle. Thereto, the blocking arrangement is configured to clamp the rail. By clamping the rail, the blocking arrangement cannot be moved along the rail. As a result, the blocking arrangement forms a mechanical barrier to a shuttle, blocking the shuttle on the track behind the blocking arrangement. As such, a safety zone can be created for human intervention.

The blocking arrangement can preferably be configured to transform pressure exerted on the blocking arrangement substantially in line with a longitudinal direction of the rail into a clamping force exerted by the blocking arrangement on said rail. The pressure exerted on the blocking arrangement substantially in line with a longitudinal direction of the rail can generally come from a shuttle moving along the rail which has not been completely stopped by a sensing system integrated in the automated warehouse shuttle system. The shuttle will thus bump into the blocking arrangement. The pressure generated by the shuttle engaging the blocking arrangement can cause the blocking arrangement to move from the first position into the second position, in which the blocking arrangement exerts a clamping force on the rail on which the blocking arrangement is mounted. The clamping force can for example include frictional forces of the blocking arrangement on the rail. Additionally, and/or alternatively, the clamping force can include pressure exerted in two opposing directions on the rail such that the rail is taken into a clamping grip, as for example in a vice.

The automated warehouse shuttle blocking arrangement can advantageously comprise a substantially L-shaped element including two leg portions, of which a first leg portion is configured to extend above the rail in a direction substantially transverse to the rail, and of which a second leg portion is configured to extend in a substantially longitudinal direction of said rail, the second leg portion extending in a direction away from a track portion to be blocked. In other words, the second leg portion is configured to extend towards a direction from which shuttles are expected to arrive and opposing a track portion or an area to be blocked where a human intervention may be needed.

Said second leg portion can preferably extend under the rail and can then be configured to engage the rail in the second position of the blocking arrangement. The L-shaped element can thus transform pressure substantially in parallel with a longitudinal direction of the rail against the first leg portion extending substantially transversally above the rail into a blocking force, for example by friction caused by the second leg portion engaging the rail.

Alternatively, the second leg portion may be configured to extend on an upper side or a running face of the rail. In such an alternative embodiment, the second leg portion of the substantially L-shaped element can be configured to engage the rail in the first position of the blocking arrangement, as well as being configured to engage the rail in the second position of the blocking arrangement. Blocking can for example occur because a wheel of the shuttle moves onto the second leg portion. A weight of the shuttle can provide pressure on the blocking arrangement and frictional forces can thus block the shuttle.

In still another embodiment, the second leg portion of the substantially L-shaped element can be configured to engage the rail in the first position of the blocking arrangement only. The blocking arrangement may further include a third leg portion extending in a direction opposite to the second leg portion. In other words, the third leg portion may be configured to extend in a direction towards a track portion to be blocked. Said third leg portion preferably extends in a plane which is different form the plane in which the second leg portion extends. In this way, the L-shaped element can tilt over a tilting line which is formed by the cornered attachment between the first leg portion and the second leg portion of the L-shaped element. When pressure is exerted substantially in parallel with a longitudinal direction of the rail against the first leg portion extending substantially transversally above the rail, said pressure can cause the blocking arrangement to tilt over said tilting line substantially transverse to a longitudinal direction of the rail and at least part of the third leg portion can engage the rail such that frictional forces can provide blocking of the shuttle on the rail.

The second leg portion can preferably include a friction coefficient increasing surface configured to face a lower side of the rail and configured to engage said lower side of the rail in the second position of the blocking arrangement. Said friction coefficient increasing surface may for example be a rubber surface or may include any other friction coefficient increasing material. More generally speaking, the blocking arrangement may include friction coefficient increasing surfaces at any location of the blocking arrangement which is configured to engage the rail. Said surfaces can improve blocking of the blocking arrangement on the rail in the second position due to frictional forces between the blocking arrangement and the rail. As an example, in case the blocking arrangement includes a third leg portion configured to clamp the rail, in particular an upper face or rolling face of the rail, in the second position of the blocking arrangement, then said third leg portion can preferably include said friction coefficient increasing surface. The blocking arrangement may include further friction coefficient increasing surfaces configured to keep the blocking arrangement in place in the first position such that, in case of pressure of a shuttle on the blocking arrangement, slipping of the blocking arrangement over the rail can be prevented. Frictional forces between the blocking arrangement and the rail are preferably high enough such that pressure on the blocking arrangement causes the blocking arrangement to move from the first position to the second position rather than causing the blocking arrangement to slip over the rail.

The second leg portion of the substantially L-shaped element can advantageously include a bend such that an end of said second leg portion is configured to bend away from the rail in the first position and to be in parallel to the rail in the second position of the blocking arrangement only. More in particular, the end of said second leg portion may be configured to form an acute angle with a lower side of the rail in the first position of the blocking arrangement and to engage said lower side of the rail in the second position. Said end of said second leg portion may for example include an acute angle with a longitudinal axis of the rest of the second leg portion comprised between more or less 10° and more or less 20°, for example an angle of substantially 15°. In this way, the blocking arrangement can make a tilting movement when moving from the first position to the second position and can provide a scissors effect enhancing a braking force on the shuttle to be blocked. Said tilting movement can have a tilting axis in the plane of the rail or in a plane in parallel with the rail and which is substantially transverse to a longitudinal direction of the rail.

It is preferred that the substantially L-shaped element, in particular the first leg portion, includes a lateral slit configured to at least partly receive the rail on which the blocking arrangement is mountable. Said lateral slit can allow a relatively easy mounting of the blocking arrangement on the rail, in particular by a sliding lateral movement. In this way, the blocking arrangement can be mounted anywhere along the rail, without further adaptations or without any other requirements. The lateral slit can preferably have a shape at least partly matching a cross-sectional shape of the rail, at least of that part of the rail configured to be received in the slit. By minimizing play between the slit and the rail, the blocking arrangement may be kept in place relatively well, even in case of a shuttle bumping into the blocking arrangement, without hindering ease of mounting. The lateral slit may preferably be included in a lower half of the first leg portion of the substantially L-shaped element.

A top end of the blocking arrangement may include a stopping element. Such a stopping element may extend in a direction away from a track portion to be blocked. The stopping element may protrude from the L-shaped element such that the stopping element may engage a shuttle to be blocked. The stopping element may for example be made of a different material than the rest of the blocking material, for example a material having a higher elasticity than the material of which the rest of the blocking arrangement is made. Said stopping element may be configured to absorb part of the energy due to the collision of the shuttle with the blocking arrangement. A location, in particular a height, of the stopping element may be chosen in function of a height of the shuttle to be blocked, in particular a height of the most protruding part of the automated warehouse shuttle. In a preferred embodiment, the stopping element may be connected to the substantially L-shaped element, in particular to the first leg portion, for example to a top end of the first leg portion. The stop element may be directly or indirectly connected or mounted to said first leg portion. Additionally, and/or alternatively, said stopping element may be made relatively heavy and may be configured to contribute to biasing the blocking arrangement into the first position.

The blocking arrangement can advantageously include a rail element configured to be positioned in a longitudinal direction on the rail and configured to receive a wheel of a shuttle to be blocked. A lower surface of the rail element may be configured to engage the rail on which the rail element is positioned, more particularly to engage a running face of the rail. Said lower surface can for example be provided with an additional friction coefficient enhancing surface, such as a rubber surface to ensure adherence of the rail element on the rail and to prevent slipping away of the blocking arrangement. In the second position of the blocking arrangement, the rail element can provide a clamping force on the rail together with the second leg portion on the substantially L-shaped element extending under the rail. In this way, the blocking arrangement can exert a clamping force on the rail like a vice: a double-sided simultaneous clamping force on an upper and a lower side of the rail. An upper surface of the rail element may be configured to face away from the running face of the rail and may further be configured to receive a wheel of a shuttle to be blocked, which wheel is then lifted up from the running face of the rail, which may additionally cause the shuttle to stop.

The blocking arrangement may further comprise a linking element configured to releasably connect said substantially L-shaped element to the rail element. Thanks to the releasable connection, the blocking arrangement may be mounted relatively easily to any part of a rail to be blocked. The linking element may for example include one or more lips extending from said linking element, which lips may be received in corresponding slits included in the rail element. The linking element may include a first side configured to face a driving direction of shuttles and a second face configured to engage the substantially L-shaped element, in particular the first leg portion of the substantially L-shaped element. The linking element, in particular said second face, may, but need not, be attached to the first leg portion of the substantially L-shaped element. In case a stop element is provided, the stop element may be provided on the linking element. Mounting means, such as bolts, screws or any other suitable and known mounting means, may be used to simultaneously mount a stopping element to the blocking arrangement and attach the linking element to the L-shaped element.

### Brief Description of the Drawings

Fig. 1 illustrates a perspective view of a part of an automated warehouse system including three automated warehouse shuttles;
Fig. 2a and 2b show a perspective view and a side view respectively on a preferred embodiment of an automated warehouse shuttle blocking arrangement in a first position according to the present invention;
Fig. 3a and 3b show a perspective view and a side view respectively on the automated warehouse shuttle blocking arrangement of Figure 2a in a second position;
Fig. 4a, 4b and 4c show a perspective view on a substantially L-shaped element, a rail element and a linking element of the automated warehouse shuttle blocking arrangement of Figure 2a;
Fig. 5 shows a perspective view on an alternative embodiment of an automated warehouse shuttle blocking arrangement according to the present invention.

### Detailed Description of Embodiment(s)

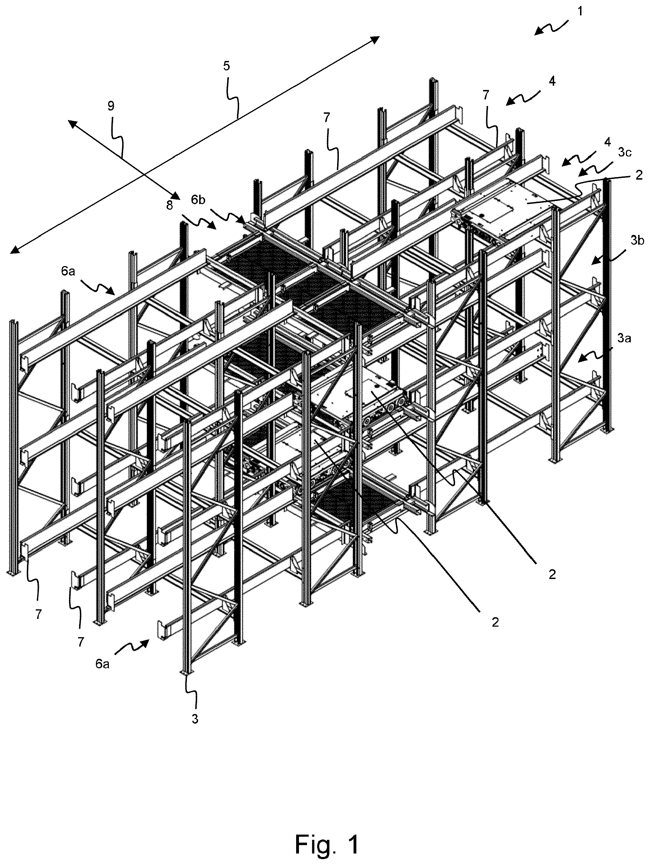

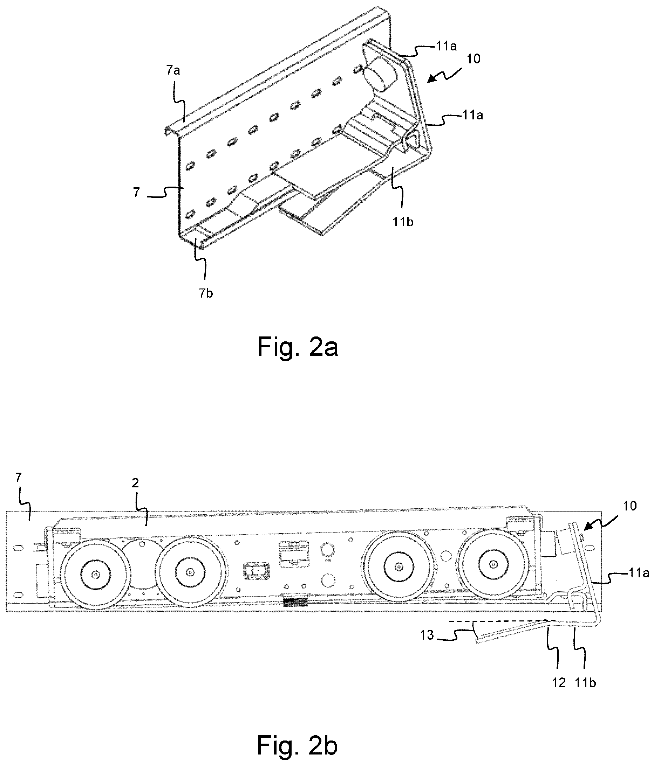

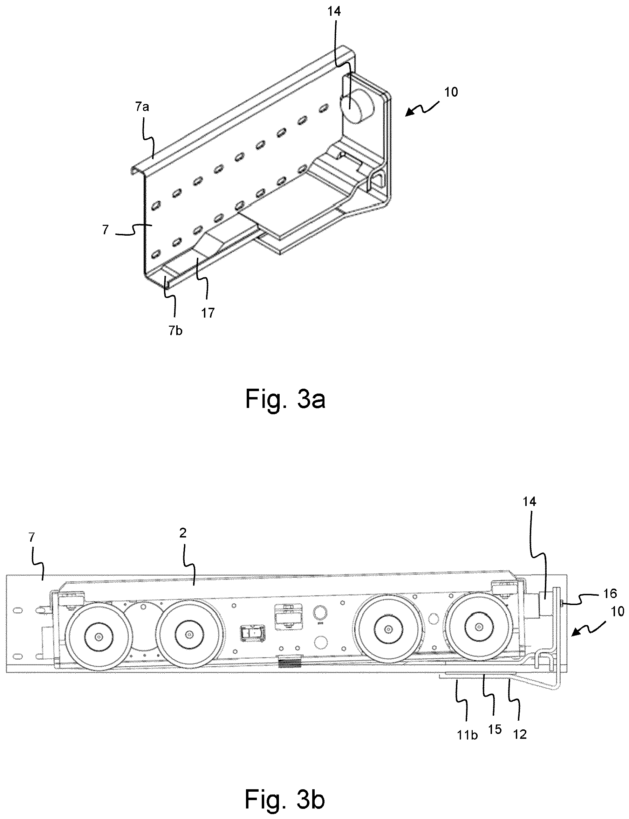

Figure 1 illustrates a perspective view of part of an automated warehouse system 1 including three automated warehouse shuttles 2. The warehouse system 1 generally includes a relatively large storage structure 3 configured to received goods for storage, for example palletized goods. The storage structure 3 can extend over a plurality of levels, of which for example three levels 3a, 3b, 3c are shown in Figure 1. The storage structure 3 generally extends along at least one storage lane 4 in a first direction 5, and preferably a plurality of storage lanes, which are substantially in parallel to each other. Transverse aisles, generally called transit lanes or main lanes 8, may connect said substantially parallel storage lanes 4, which transverse aisles may also be provided with tracks extending in a second direction 9 substantially transverse to the first direction 5. Storage lanes 4 usually do not include a solid floor, whereas transit lanes 8 may be provided with a solid floor, for example gratings, at predetermined levels. A first track 6a including at least one rail 7, preferably a pair of rails at a distance of each other, extend in said storage lane 4, preferably on every level 3a, 3b, 3c of each storage lane 4. Said rails 7 can preferably include two substantially horizontal surfaces: an upper surface 7a configured to support stored goods and a lower surface 7b (see Fig. 2a or 3a) configured to receive wheels of an automated warehouse shuttle 2. Said rails may thereto have a specific shape, for example a stepped shape including a lower flange extending inwardly towards the other rail of a pair of rails, and an upper flange extending outwardly, so extending away from the other rail of a pair of rails. The upper flange may then be configured to receive goods for storage while the lower flange may guide the automated warehouse shuttles 2. Other shapes including an upper surface and a lower surface may be used as well. A second track 6b extend in a main lane or transit lane 8. Said second track 6b may have a similar shape as the first track 6a, or more preferably, may have a different shape, since no goods are stored in said main lane 8. Automated warehouse shuttles 2 may be configured to drive along tracks 6a and 6b of storage lanes 4 and of main lanes 8 respectively of a same level without the shuttles being oriented differently. In other words, shuttles do not turn into another direction. Instead, the shuttles may preferably include two sets of wheels which are lowered and/or risen according to the lane in which they are driving. Alternatively, automated warehouse shuttles 2 may be configured to drive along a single direction only.

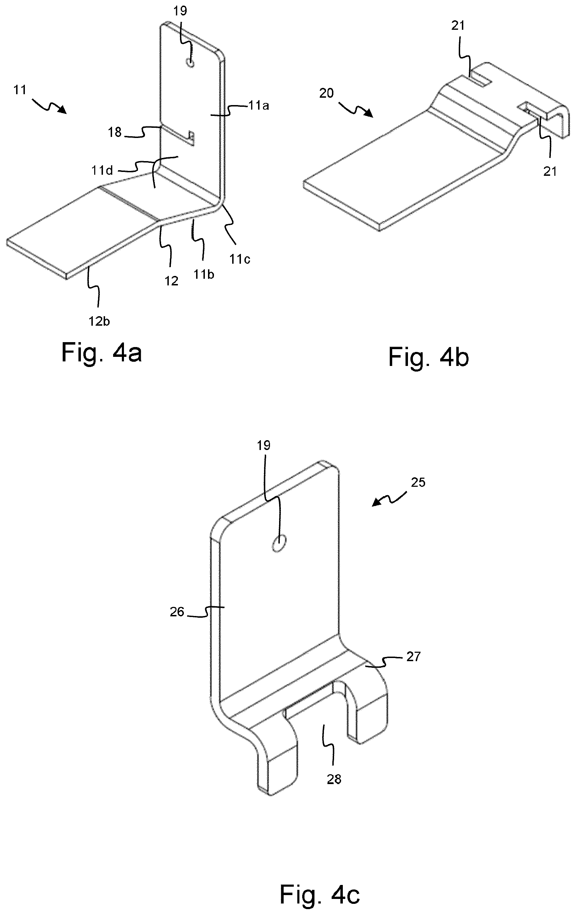

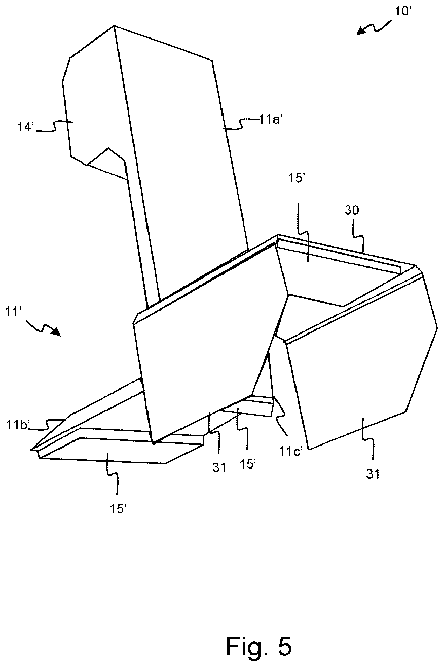

Figures 2a and 2b show a perspective view and a side view, respectively, on a preferred embodiment of an automated warehouse shuttle blocking arrangement 10 in a first position according to the present invention. The blocking arrangement 10 is configured to be removably mountable on a rail of a track configured to guide at least one automated warehouse shuttle, as will be shown and explained with reference to Figures 4a, 4b and 4c. In this way, a human intervener can mount the blocking arrangement on a rail of a track only where a human intervention is needed, and only for the time necessary for the intervention, such that the rest of the automated warehouse shuttle system can continue to function. The blocking arrangement 10 is movable between a first position, shown in Figures 2a and 2b, and a second position, shown in Figures 3a and 3b. In said first position, the blocking arrangement is mountable and/or unmountable to the rail. The blocking arrangement 10 remains in said first position as long as no automated warehouse shuttle 2 has bumped into said blocking arrangement 10. Since an automated warehouse shuttle 2 generally includes an automated stop system which is configured to slow down and stop the shuttle when the sensor senses an obstacle in the driving direction of the shuttle 2, the shuttle may be stopped by said automated system at a distance of the blocking arrangement without bumping into it, as shown in Figure 2b. However, this is not safe enough for a human intervention behind the blocking arrangement. If the automated stopping system of the automated warehouse shuttle does not function correctly, or if said system does not react fast enough, the blocking arrangement 10 is movable to a second position, in which the blocking arrangement 10 is configured to clamp the rail 7 such that the at least one automated warehouse shuttle 2 is blocked, as shown in Figure 3b. Thereto, the blocking arrangement 10 comprises a substantially L-shaped element 11 including two leg portions, of which a first leg portion 11a is configured to extend above the rail 7 in a direction substantially transverse to the rail, and of which a second leg portion 11b is configured to extend in a substantially longitudinal direction of said rail away from a track portion to be blocked. In other words, the second leg portion 11b is configured to extend towards a direction from which automated shuttles are expected to come from. Said second leg portion 11b may be configured to extend under the rail 7 and to engage the rail in the second position of the blocking arrangement 10, as shown in Figure 3b. Alternatively, the second leg portion may be configured to extend above the rail 7, as will be shown in Figure 5. The second leg portion 11b can preferably include a bend 12 such that an end of said second leg portion 11b is configured to be in parallel to the rail in the second position of the blocking arrangement only while bending away from said rail 7 in the first position of the blocking arrangement 10. Said bend 12 can for example include an angle 13 with the second leg portion 11b which is comprised in a range of more or less 5° to more or less 25°, for example an angle of around 15°. The larger the angle 13, the longer it takes before said bend 12 engages the rail 7 in the second position of the blocking arrangement 10. The smaller the angle 13, the more difficult it may be to mount the blocking arrangement 10 to the rail 7. Due to the different angles and bends of the blocking arrangement 10, the first leg portion 11a may be slightly inclined towards a direction from which an automated warehouse shuttle is expected to come in the first position of the blocking arrangement 10, whereas the first leg portion 11a may form an angle of more or less 90° with the rail in the second position of the blocking arrangement 10.

Figures 3a and 3b show a perspective view and a side view, respectively, on the automated warehouse shuttle blocking arrangement of Figure 2a in a second position. In the second position, the blocking arrangement 10 is configured to clamp the rail 7 such that the at least one automated warehouse shuttle 2 is blocked on said rail 7. In this way, a human intervener can safely work behind said blocking arrangement. The blocking arrangement 10 may be further configured to transform pressure exerted on the blocking arrangement 10 substantially in line with a longitudinal direction of the rail 7, for example from an automated warehouse shuttle 2 bumping into the blocking arrangement 10, into a clamping force exerted by the blocking arrangement 10 on said rail 7. The blocking arrangement 10 is moved into the second position by the automated warehouse shuttle 2 engaging the blocking arrangement 10. To enhance blocking in said second position, at least part of the second leg portion 11b, in particular the portion between the bend 12 and an end of the second leg portion 11b, may preferably include a friction coefficient increasing surface 15 configured to face a lower side of the rail 7 and configured to engage said lower side of the rail 7 in the second position of the blocking arrangement. Said surface 15 can prevent slipping of the blocking arrangement 10 along the rail 7. The blocking arrangement 10 may further include a stopping element 14 connected to the substantially L-shaped element 11, in particular to the first leg portion 11a. Said stopping element 14 may be made of a different material than the substantially L-shaped element 11 of the blocking arrangement 10, for example of a material having a higher elasticity, for example of rubber or of any other suitable material known to the person skilled in the art. In this way, the stopping element 14 may be configured to at least partly absorb the energy of a shock between the automated warehouse shuttle 2 and the blocking arrangement 10. The stopping element 14 may be in direct contact with the first leg portion 11a or may be indirectly connected to said first leg portion 11a, as shown in Figure 3b. The stopping element 14 may be mounted to the blocking arrangement 10 by a screw, bolt, or by any other suitable mounting means 16. Optionally, the blocking arrangement 10 may additionally include a wedge-shaped element 17 which may be placed separately on the rail 7, in particular on a rolling face of the rail 7, in front of the blocking arrangement 10 seen in the driving direction of the automated warehouse shuttle 2, such that a wheel of said shuttle 2 is lifted up from the rail and guided onto the blocking arrangement 10. Alternatively, such a wedge-shaped element may be integrally formed with the blocking arrangement. The blocking arrangement 10 may have a width which is similar to a width of the rail 7 or may have a width which is larger than a width of the rail 7, as shown in the present embodiment.

Figures 4a, 4b and 4c show a perspective view on a substantially L-shaped element 11, a rail element 20 and a linking element 25 respectively of the preferred embodiment of the automated warehouse shuttle blocking arrangement of Figure 2a. In said preferred embodiment, the blocking arrangement 10 comprises at least three elements: a substantially L-shaped element 11, a rail element 20, and a linking element 25. Such an assembly of at least three elements can allow a relatively easy mounting of the blocking arrangement 10 on a rail 7. According to a preferred way of mounting said blocking arrangement on a rail of an automated warehouse, the substantially L-shaped element 11 may be slid laterally onto the rail 7. Thereto, the substantially L-shaped element 11, in particular the first leg portion 11a, can include a lateral slit 18 configured to at least partly receive the rail 7 on which the blocking arrangement 10 is mountable. The slit 18 can preferably match a cross-sectional shape of the rail 7, for example including a short bend upwards or downwards if the rail includes a corresponding side edge such that the substantially L-shaped element 11 does not slip off the rail 7. The lateral slit 18 allows the second leg portion 11b to extend under the rail 7. The first portion 11a of the substantially L-shaped element 11 may further include a hole 19 configured to receive a mounting means, such as a bolt or a screw, for mounting the stopping element 14 to the substantially L-shaped element 11. As explained before, the second leg portion 11b can preferably include a bend 12 such that an end portion 12b of the second leg portion 11b includes an angle 13 of more or less 15°. At the same time, an angle 11d between the first leg portion 11a and the second leg portion 11b at bend or attachment 11c is preferably smaller than 90°. The angle 13 at bend 12 can then preferably compensate for the angle 11d smaller than 90° such that the end portion 12b of the second leg portion includes an angle of more or less 90° with the first leg portion 11a.

The blocking arrangement 10 preferably further includes a rail element 20 configured to be positioned in a longitudinal direction on the rail 7 and configured to receive a wheel of the at least one shuttle 2. The blocking arrangement 10 can further comprise a linking element 25 configured to releasably connect said substantially L-shaped element 11 to the rail element 20. Thereto, the rail element 20 may include at least one lateral slit 21, preferably two lateral slits on opposite sides of the rail element when seen in a longitudinal direction of the rail 7. Said lateral slits 21 may be configured to receive the linking element 25. In particular, the linking element may include a plate-like portion 26 configured to be positioned in parallel to the first leg portion 11a of the substantially L-shaped element 11 and in engaging contact with said first leg portion 11a. The linking element 25 can further include a stepped portion 27, which stepped portion 27 may include a recess 28 configured to receive at least part of the rail element 20. The plate-like portion may also include a hole 19 such that a single fastening or mounting means can fasten the plate-like portion 26 to the first leg portion 11a, as well as mount the stopping element 14 to the blocking arrangement 10. In summary, the blocking arrangement 10 may be mounted onto a rail 7 in four steps. First, the substantially L-shaped element 11 may be slid sideways onto a rail 7. Then, the rail element 20 may be positioned in front of the first leg portion 11a of the substantially L-shaped element 11 seen in the driving direction of an automated warehouse shuttle 2. Then the linking element 25 is slid substantially vertically into the rail element 25. Finally, a mounting or fastening means 16 may be inserted through holes 19 in the first leg portion 11a of the substantially L-shaped element 11 and the linking element 25 and may fasten a stopping element 14 to the blocking arrangement 10. This may be done on a single rail or on both rails of a track.

Fig. 5 shows a perspective view on an alternative embodiment of an automated warehouse shuttle blocking arrangement 10' according to the present invention. This blocking arrangement 10' is easily mountable to a rail 7 of a track in that it can be positioned on a running race of a rail without fixation. The blocking arrangement 10' also includes a substantially L-shaped element 11' including two leg portions, of which a first leg portion 11a' is configured to extend above the rail in a direction substantially transverse to the rail, and of which a second leg portion 11b' is configured to extend in a substantially longitudinal direction of said rail away from a track portion to be blocked. Contrary to the previous embodiment, said second leg portion 11b' is also configured to extend on a running face of the rail, not under a rail. Contrary to the previous embodiment, the first leg portion 11a' can include an angle with the rail on which the blocking arrangement is positioned of more or less 90° in the first position of the blocking arrangement 10'. To prevent slipping of the blocking arrangement 10' on impact by the automated warehouse shuttle 2, a bottom side of said second leg portion 11b' can include at least one friction coefficient increasing surface 15', which is configured to engage the rail in a first position of the blocking arrangement 10'. In a second position of the blocking arrangement 10', the blocking arrangement 10' is configured to clamp the rail, in that blocking arrangement is configured to transform pressure exerted on the blocking arrangement substantially in line with a longitudinal direction of the rail, for example exerted by an automated warehouse shuttle bumping into the blocking arrangement 10', into a clamping force exerted by the blocking arrangement on said rail. Thereto, the blocking arrangement 10' can include a blocking arm 30 configured to extend into a direction opposite to the direction into which said second leg portion 11b' extends. At least a portion of said blocking arm 30 is configured to engage the rail, in particular a running face of the rail, in the second position of the blocking arrangement 10'. Thereto, the blocking arrangement 10' is configured to be tilted over a tilting axis, which corresponds to the bend 11 c' of the substantially L-shaped element linking the first leg portion 11 a' and the second leg portion 11b'. A height of attachment of the blocking arm 30 to the first leg portion 11 a' of the substantially L-shaped element 11 a' and a length of said blocking arm 30 may be chosen according to an angle of tilt which is desired, depending among other factors on expected force of impact. Said bending arm 30 can also be provided with a friction coefficient increasing surface 15', which may for example have a wedged shape (not shown). Said blocking arm 30 may include one or two side wings 31 extending downwardly when the blocking arrangement is positioned on a rail. Such side wings can provide side support to the blocking arrangement 10' to prevent the blocking arrangement from falling off from the rail. However, in that case, the rail should have a different shape than the rail 7 shown in the previous Figures. The substantially L-shaped element 14', in particular an upper end of the first leg portion 11 a', can also include a stopping element 14' configured to extend towards an automated warehouse shuttle 2 to be blocked and configured to engage said shuttle 2 in case it is not stopped automatically. Said stopping element 14' may be integrally shaped with the blocking arrangement 10' and may be made relatively heavy to bias the blocking arrangement 10' in the first position. Additionally, the stopping element 14' may be covered with a shock absorbing material. Depending on a length of the second leg portion 11b', said second leg portion 11b' may be bevelled towards a front direction from which automated warehouse shuttles 2 are expected to arrive.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An automated warehouse shuttle blocking arrangement, the arrangement being removably mountable on a rail of a track configured to guide at least one automated warehouse shuttle, wherein the blocking arrangement is movable between a first position, in which the blocking arrangement is mountable and/or unmountable to the rail, and a second position, in which the blocking arrangement is configured to clamp the rail such that the at least one automated warehouse shuttle is blocked.

2. The automated warehouse shuttle blocking arrangement according to claim 1, wherein the blocking arrangement is configured to transform pressure exerted on the blocking arrangement substantially in line with a longitudinal direction of the rail into a clamping force exerted by the blocking arrangement on said rail.

3. The automated warehouse shuttle blocking arrangement according to any of the preceding claims, comprising a substantially L-shaped element including two leg portions, of which a first leg portion is configured to extend above the rail in a direction substantially transverse to the rail, and of which a second leg portion is configured to extend in a substantially longitudinal direction of said rail away from a track portion to be blocked.

4. The automated warehouse shuttle blocking arrangement according to claim 3, wherein said second leg portion is configured to extend under the rail and to engage the rail in the second position of the blocking arrangement.

5. The automated warehouse shuttle blocking arrangement according to claim 3, wherein the second leg portion includes a friction coefficient increasing surface configured to face a lower side of the rail and configured to engage said lower side of the rail in the second position of the blocking arrangement.

6. The automated warehouse shuttle blocking arrangement according to any of the preceding claims 3-4, wherein the second leg portion includes a bend such that an end of said second leg portion is configured to be in parallel to the rail in the second position of the blocking arrangement only.

7. The automated warehouse shuttle blocking arrangement according to any of the preceding claims 3-5, wherein the substantially L-shaped element, in particular the first leg portion, includes a lateral slit configured to at least partly receive the rail on which the blocking arrangement is mountable.

8. The automated warehouse shuttle blocking arrangement according to any of the preceding claims 3 - 5, wherein a stopping element is connected to the substantially L-shaped element, in particular to the first leg portion.

9. The automated warehouse shuttle blocking arrangement according to any of the preceding claims, the blocking arrangement including a rail element configured to be positioned in a longitudinal direction on the rail and configured to receive a wheel of the at least one shuttle.

10. The automated warehouse shuttle blocking arrangement according to any of the preceding claims 3 - 7 and to claim 8, the blocking arrangement further comprising a linking element configured to releasably connect said substantially L-shaped element to the rail element.
